# EUROPEAN PATENT APPLICATION

(11) **EP 4 775 073 A1**
(43) Date of publication of application: **15.07.2026**
(21) Application number: 25151272.9
(22) Date of filing: 10.01.2025
(51) Int. Cl.: A43B 13/12, B29D 35/14

(54) **CO-MOLDED SHOE COMPONENT AND METHOD OF MANUFACTURING THE SAME**

(71) Applicant: Feng Tay Enterprises Co., Ltd., Douliu City, Yunlin County 640111 (TW)
(72) Inventor: YANG, Tsung-Lin, 640103 Douliu City (TW); CHANG, Yu-Ta, 523007 Pitou Township (TW)
(74) Representative: van Dam, Vincent

(57) **Abstract**

A co-molded shoe component (100, 100A) and a method of manufacturing the same are provided. The co-molded shoe component (100, 100A) includes an outsole (10, 40) and a midsole (20). A side of the outsole (10, 40) has a plurality of anchor structures. The anchor structures could be protrusions (13, 13A, 13B, 13C, 13D), recesses (14), or through holes (15, 16). The midsole (20) is formed through physical foaming with a supercritical fluid and is simultaneously engaged with the outsole (10, 40). A part of the midsole (20) is completely engaged with the anchor structures. The method includes placing the formed outsole (10, 40) in a mold (300), controlling an air pressure in the mold (300), and after injecting a thermoplastic foaming fluid, releasing the air pressure to foam the thermoplastic foaming fluid to form the midsole (20) and to integrally engage the midsole (20) with the outsole (10, 40).

## Description

### BACKGROUND OF THE INVENTION

### Technical Field

The present invention relates generally to a shoe product, and more particularly to a co-molded shoe component and a method of manufacturing the same.

### Description of Related Art

A conventional shoe typically includes a sole and an upper. The sole could include an outsole and a midsole based on functional requirements. The outsole is adapted to contact a ground. The midsole generally has a shock absorption effect. The outsole, the midsole, and the upper are independent components and are required to engage with one another one by one through complicated processing procedures, which is costly and reduces the production efficiency. Moreover, the midsole is generally produced through chemical foaming, wherein the size shrinkage rate of the midsole might easily become unstable during production, causing mismatching of sizes and presence of excessive adhesive when the midsole is subsequently attached to the outsole by using an adhesive. To address the aforementioned problem, the midsole is required to be finely shaped into a suitable shape before attaching to the outsole, which leads to additional processing procedures. Additionally, the adhesive is toxic, harmful to health of workers, and environmentally unfriendly.

Casting PU has been developed for producing the midsole and co-molding with the outsole. However, the attachment between the midsole and the outsole still requires chemical reactions. Additionally, casting PU includes using a crosslinking agent, so that the midsole formed through casting PU is difficult to recycle. Alternatively, the midsole could be produced and co-molded with the outsole through injection physical foaming. However, a temperature and a pressure generated in injection physical foaming are significantly lower than conditions of conventional co-molding, such that an adhesion strength between the midsole and the outsole formed through physical foaming is lower than the safety standard, causing potential safety risks that the midsole is detached from the outsole during wearing.

### BRIEF SUMMARY OF THE INVENTION

In view of the above, the primary objective of the present invention is to provide a co-molded shoe component and a method of manufacturing the same, wherein an engagement strength between components of the co-molded shoe component could be enhanced without using an adhesive.

The present invention provides a co-molded shoe component including an outsole and a midsole. The outsole includes an engaged surface and a plurality of anchor structures. The plurality of anchor structures are located on the engaged surface. A total surface area A is a sum of a surface area of the plurality of anchor structures and a surface area of the engaged surface. A surface area B is a surface area of an imaginary engaged surface which does not have the plurality of anchor structures. An A/B ratio is greater than 1. The midsole is formed through physical foaming with a supercritical fluid. The midsole includes an engaging surface. The engaging surface of the midsole is engaged with the engaged surface and the plurality of anchor structures.

The present invention further provides a method of manufacturing a co-molded shoe component, including: providing an outsole, wherein the outsole has an engaged surface and a plurality of anchor structure located on the engaged surface; a number of the plurality of anchor structures per square centimeter ranges between 40 and 180; placing the outsole in a mold and reserving a foaming space in the mold; controlling an air pressure in the mold to be greater than or equal to 5 bar and be less than or equal to 50 bar; injecting a thermoplastic foaming fluid into the foaming space of the mold, wherein the thermoplastic foaming fluid includes a supercritical fluid; releasing the air pressure in the mold to foam the thermoplastic foaming fluid to form a midsole which is physically foamed, wherein the midsole has an engaging surface; the engaging surface is engaged with the engaged surface of the outsole and the plurality of anchor structures; and opening the mold and taking out a co-molded shoe component including the outsole and the midsole.

With the aforementioned design, the physically foamed midsole is engaged with the outsole in the mold through co-molding, and the outsole has the anchor structures for increasing the contact surface area between the outsole and the midsole, so that the engagement strength between the midsole and the outsole could be enhanced. Moreover, when the outsole is engaged with the midsole, no adhesive is needed.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the co-molded shoe component according to an embodiment of the present invention;
FIG. 2 is a sectional view along the 2-2 line in FIG. 1;
FIG. 3 is a partially enlarged view of a marked region A in FIG. 2;
FIG. 4 is a perspective view of the outsole of the co-molded shoe component according to the embodiment of the present invention;
FIG. 5 is a top view of the outsole in FIG. 4;
FIG. 6 is a sectional view along the 6-6 line in FIG. 5;
FIG. 7 is a partially enlarged view of the structure in FIG. 6;
FIG. 8 is a schematic view of the mold used in manufacturing the outsole in FIG. 6;
FIG. 9 is a flowchart of the method of manufacturing the co-molded shoe component according to an embodiment of the present invention;
FIG. 10 is a schematic view of the mold used in manufacturing the co-molded shoe component;
FIG. 11 is another schematic view of the mold used in manufacturing the co-molded shoe component;
FIG. 12 is a schematic view of the co-molded shoe component manufactured by using the mold in FIG. 11;
FIG. 13 is a schematic enlarged view, showing that the anchor structures of the outsole are protrusions with a narrow top and a wide bottom;
FIG. 14 is a schematic enlarged view, showing that the anchor structures of the outsole are protrusions with a wide top and a narrow bottom;
FIG. 15 is a schematic enlarged view, showing that the anchor structures of the outsole are recesses formed by recessing into the outsole;
FIG. 16 is a schematic enlarged view, showing that the anchor structures of the outsole are through holes;
FIG. 17 is a schematic enlarged view, showing that the anchor structures of the outsole are through holes with a narrow top and a wide bottom;
FIG. 18 is a perspective view of the outsole of the co-molded shoe component according to another embodiment of the present invention;
FIG. 19 is a sectional view along the 19-19 line in FIG. 18;
FIG. 20 is a schematic enlarged view, showing that the anchor structures of the outsole in different regions have different root portion widths; and
FIG. 21 is a schematic enlarged view, showing that the anchor structures of the outsole in different regions have different extension directions.

### DETAILED DESCRIPTION OF THE INVENTION

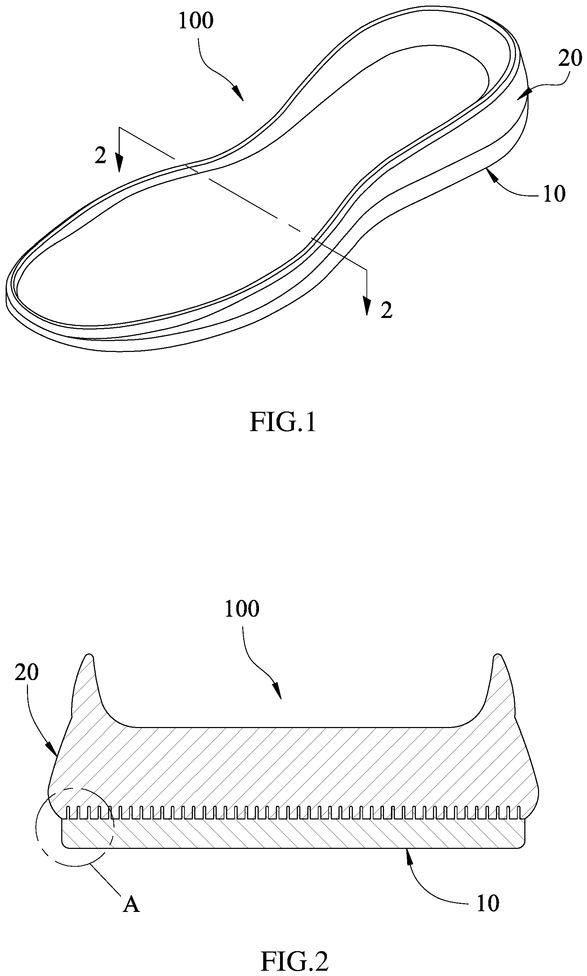

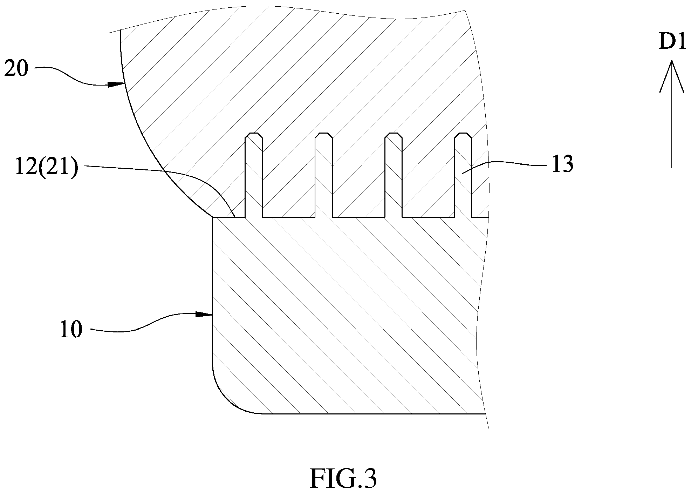

A co-molded shoe component 100 according to an embodiment of the present invention is illustrated in FIG. 1 to FIG. 3 and includes an outsole 10 and a midsole 20. The outsole 10 is provided in advance. The outsole 10 is placed in a mold and then is engaged with the midsole 20 in the mold to form a monolithic unit through physical foaming. In the following description, structures of the outsole 10 and the midsole 20 are explained first, and a method of manufacturing the co-molded shoe component 100 is explained afterwards.

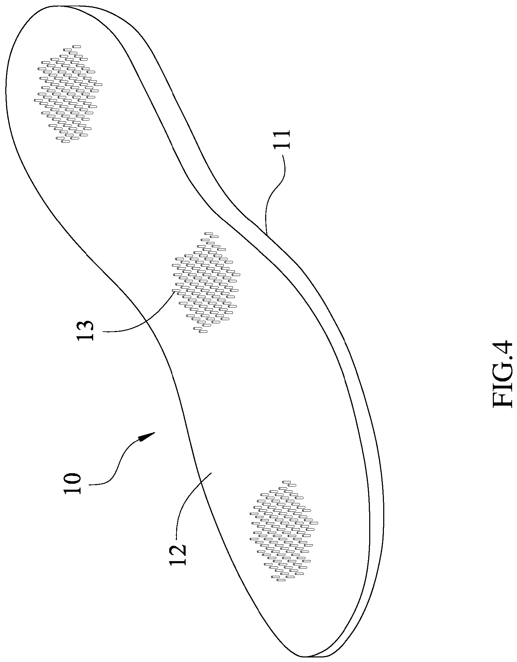

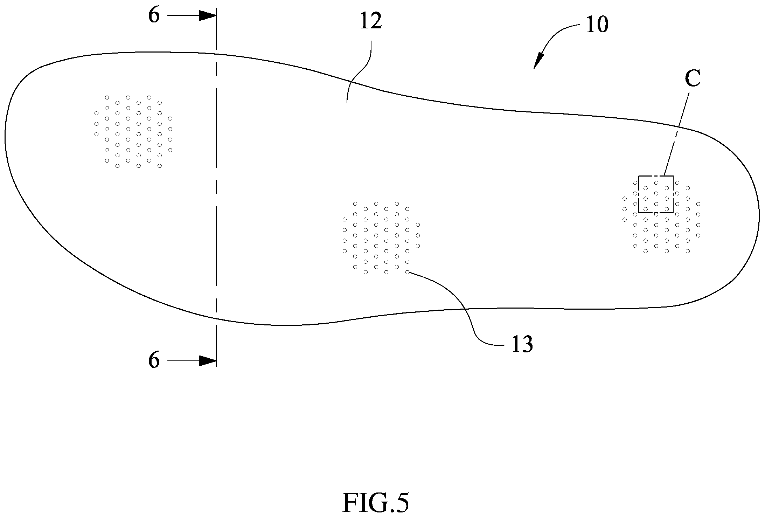

Referring to FIG. 4 to FIG. 6, in the current embodiment, the outsole 10 has a bottom surface 11 adapted to contact a ground and an engaged surface 12 opposite to the bottom surface 11. The outsole 10 has a plurality of anchor structures on the engaged surface 12, wherein the anchor structures are integrally formed with the outsole 10 when the outsole 10 is made. A total surface area A is a sum of a surface area of the anchor structures and a surface area of the engaged surface 12. A surface area B is a surface area of an imaginary engaged surface which does not have the anchor structures. An A/B ratio (a ratio of the total surface area A to the surface area B) is greater than 1. The imaginary engaged surface provided without the anchor structures could be, for example, a flat surface of a conventional outsole formed through injection molding. A number of the anchor structures per square centimeter C of the engaged surface 12 ranges between 40 and 180. An interval G between two adjacent anchor structures of the anchor structures of the outsole 10 is greater than or equal to 0.3 mm and is less than or equal to 1.2 mm.

In an embodiment, the A/B ratio is greater than or equal to 1.2 and is less than or equal to 3.0. Preferably, the A/B ratio is greater than or equal to 1.5 and is less than or equal to 2.0. In order to satisfy the aforementioned condition, the number of the anchor structures per square centimeter C and the interval G of the present invention could be correspondingly adjusted. For example, when the number of the anchor structures per square centimeter C is between 50 and 170, the interval G between two adjacent anchor structures of the anchor structures is greater than or equal to 0.3 mm and is less than or equal to 1.0 mm; when the number of the anchor structures per square centimeter C is between 80 and 120, the interval G between two adjacent anchor structures of the anchor structures is greater than or equal to 0.5 mm and is less than or equal to 1.0 mm.

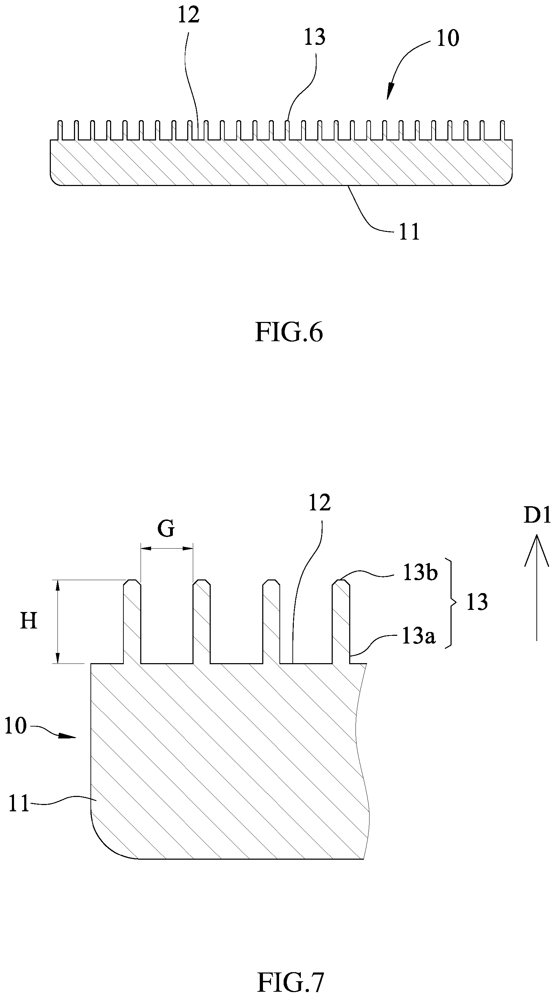

Referring to FIG. 7, in the current embodiment, the anchor structures are a plurality of protrusions 13. Each of the protrusions 13 is disposed along a first direction D1, wherein the first direction D1 is a direction perpendicular to the engaged surface 12 of the outsole 10. In the current embodiment, each of the protrusions 13 has a root portion 13a and a top portion 13b, wherein the root portion 13a is integrally connected to the engaged surface 12, and a height H of each of the protrusions 13 from the root portion 13a to the top portion 13b is greater than or equal to 0.3 mm and is less than or equal to 1.2 mm. In the current embodiment, the number of the protrusions 13 per square centimeter C is 90; the interval G between two adjacent protrusions 13 of the protrusions 13 is 0.6 mm; the height H of each of the protrusions 13 is 0.7 mm. In this way, a surface area of the outsole 10 could be increased through providing the protrusions 13 on the engaged surface 12 of the outsole 10. In comparison with the flat surface of the conventional outsole, the A/B ratio in the current embodiment is greater than or equal to 1.5 and is less than or equal to 2.0.

In the current embodiment, the outsole 10 is formed through injection molding, wherein an injection molding material of the outsole 10 could be a thermoplastic material or a thermosetting material. The thermoplastic material is selected from a group consisting of thermoplastic polyurethane (TPU), polyamide, polyester, ionomer, and a combination thereof. The thermosetting material is selected from a group consisting of epoxy resin, thermosetting polyurethane, rubber, and a combination thereof. In the current embodiment, the injection molding material is the thermoplastic material, which is easily recyclable and reusable, as an example. Moreover, no matter the thermoplastic material or the thermosetting material is selected for manufacturing the outsole 10, another material could be added during manufacturing the outsole 10, wherein the another material is selected from a group consisting of carbon fibers, glass fibers, natural fibers, and a combination thereof.

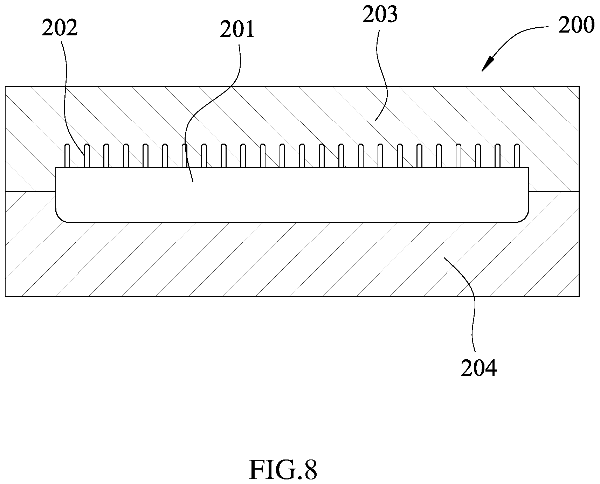

Referring to FIG. 8, in the current embodiment, a mold 200 used in manufacturing the outsole 10 is provided with a plurality of recessed holes 202 on a predetermined portion of a mold cavity 201 of the mold 200. The recessed holes 202 are adapted to mold the protrusions 13. A number of the recessed holes 202 per square centimeter ranges between 40 and 180. As the number of the protrusions 13 per square centimeter C is 90 as an example, the number of the recessed holes 202 per square centimeter is 90. In other words, the number of the recessed holes 202 is equal to the number of the protrusions 13 formed, an interval between two adjacent recessed holes 202 of the recessed holes 202 is equal to the interval G between two adjacent protrusions 13 of the protrusions 13 formed, and a hole depth of each of the recessed holes 202 is equal to the height H of each of the protrusions 13 formed. It is worth mentioning that the recessed holes 202 could be distributed on a part of a side of the mold cavity 201 or on the whole side of the mold cavity 201; the interval between two adjacent recessed holes 202 of the recessed holes 202 is not limited to being constant and the hole depth of each of the recessed holes 202 is not limited to being constant, wherein the interval between two adjacent recessed holes 202 of the recessed holes 202 and the hole depth of each of the recessed holes 202 could be adjusted to meet different product requirements; for example, the hole depth of each of the recessed holes 202 located adjacent to a peripheral edge of the outsole 10 could be greater than the hole depth of each of the recessed hole 202 located on a middle of the outsole 10.

The recessed holes 202 are formed by directly processing a top mold 23 or a bottom mold 204 of the mold 200 through electrical discharge machining or computer numerical control machining process. Additionally, the mold could be a mold formed through metal 3D printing, wherein the recessed holes are hollow structures that are formed during metal 3D printing. In this way, after both the mold cavity 201 and the recessed holes 202 are fully filled with the injection molding material and are cooled, a molded product taken out after opening the mold 200 is the outsole 10 with the protrusions 13 shown in FIG. 4 to FIG. 6. It is worth mentioning that although the outsole 10 is provided by using the mold 200, the outsole 10 with the protrusions 13 could be provided through 3D printing in practice; at that time, the outsole 10 is a 3D printed structure instead of the molded product. Moreover, no matter the protrusions 13 of the outsole 10 are formed through molding or 3D printing, the protrusions 13 are different from a rough surface of a conventional outsole manufactured through roughening.

The midsole 20 of the co-molded shoe component 100 is formed through physical foaming with a supercritical fluid. The midsole 20 is a structure with a foam density ranging between 0.1 g/cm³ and 0.3 g/cm³. Referring to FIG. 2 to FIG. 3, the midsole 20 has an engaging surface 21. The engaging surface 21 is engaged with the engaged surface 12 and the protrusions 13 of the outsole 10. More specifically, the engaging surface 21 is engaged with the engaged surface 12 and the protrusions 13 in a covering manner. As a contact surface area between the engaging surface 21 and the engaged surface 12 and the protrusions 13 is increased, an adhesion strength between the midsole 20 and the outsole 10 could be greater than or equal to 3 kg/cm (according to ASTM-D903 Test Method) after the midsole 20 and the outsole 10 are integrally engaged to form a monolithic unit, thereby ensuring engagement stability and safety during wearing. In the current embodiment, the midsole 20 is made of a thermoplastic material and a foaming aid. A weight percentage of the thermoplastic material of the midsole 20 ranges between 90wt% and 99wt% of the midsole 20. A weight percentage of the foaming aid of the midsole 20 ranges between 1 wt% and 10wt% of the midsole 20. The thermoplastic material of the midsole 20 is selected from a group consisting of thermoplastic polyurethane (TPU), polyamide, polyester, ionomer, and a combination thereof. The foaming aid of the midsole 20 is selected from a group consisting of mineral fibers, calcium carbonate, silica, talcum powder, sodium bicarbonate, and a combination thereof.

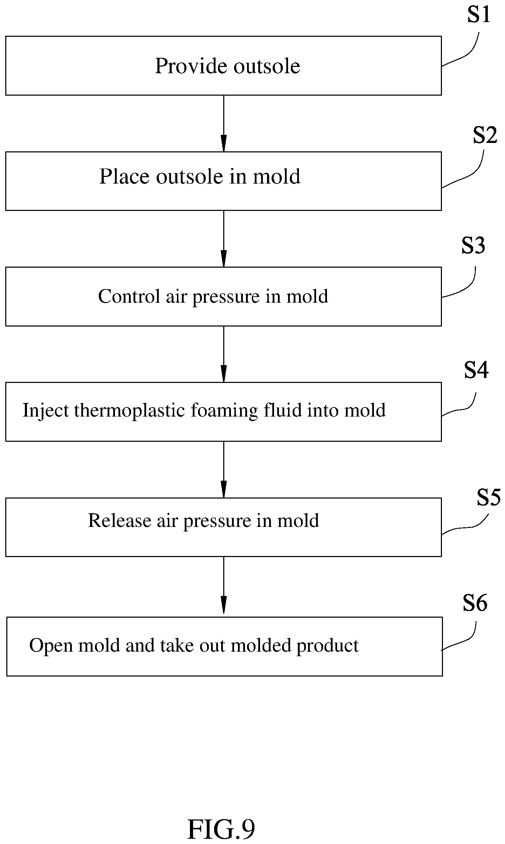

The structure of the co-molded shoe component 100 is explained above. Referring to FIG. 9, the method of manufacturing the co-molded shoe component 100 is includes the following steps.

Step S1: provide the outsole 10. As illustrated in the above, the outsole 10 could be provided by using a mold or 3D printing. The number of the protrusions 13 per square centimeter C of the engaged surface 12 of the outsole 10 ranges between 40 and 180. In the current embodiment, the outsole 10 is provided by using the mold 200, and the number of the protrusions 13 per square centimeter C is 90.

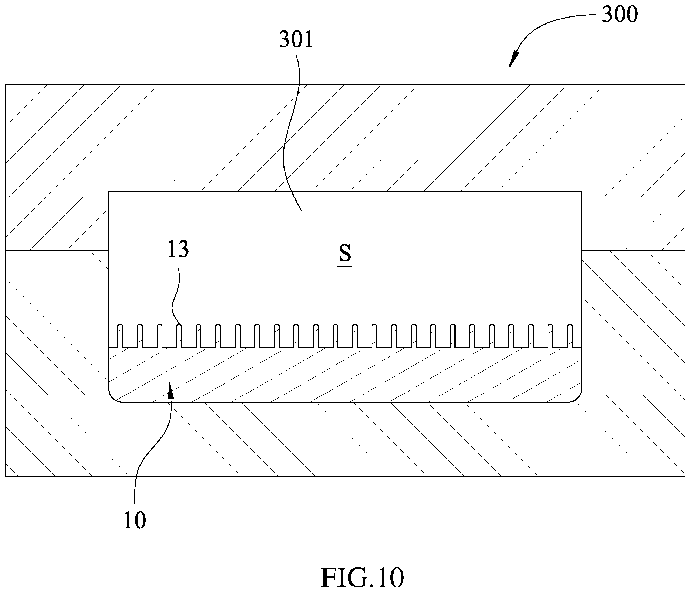

Step S2: open the mold 200, take out the outsole 10, and place the outsole 10 in a mold cavity 301 of another mold 300. Referring to FIG. 10, a foaming space S is a remaining space of the mold cavity 301 after subtracting a space occupied by the outsole 10.

Step S3: control an air pressure in the mold 300 to be greater than or equal to 5 bar and be less than or equal to 50 bar. In the current embodiment, the air pressure is set to be greater than or equal to 5 bar and be less than or equal to 20 bar.

Step S4: inject a thermoplastic foaming fluid into the foaming space S of the mold 300, wherein the thermoplastic foaming fluid includes the thermoplastic material of the midsole 20, the foaming aid of the midsole 20, and a supercritical fluid. The supercritical fluid includes nitrogen or carbon dioxide. An addition of the thermoplastic foaming fluid accounts for 10% to 50% of a volume of the foaming space S. The thermoplastic foaming fluid maintains an unfoamed state due to the preset air pressure in the foaming space S.

Step S5: release the air pressure in the mold 300 to foam the thermoplastic foaming fluid and fully fill the foaming space S with the thermoplastic foaming fluid, wherein the thermoplastic foaming fluid further fills in gaps between the protrusions 13 of the outsole 10; at the same time, the supercritical fluid generates a plurality of small bubbles in a foamed structure due to separation of a gas phase. The aforementioned steps are injection molding with physical foaming, and the molded product is the midsole 20 that is physically foamed. The structures of the midsole 20 and the outsole 10 are illustrated as above and are not repeated here.

Step S6: open the mold 300 and take out the co-molded shoe component 100 including the outsole 10 and the midsole 20 shown in FIG. 1 and FIG. 2.

The method makes use of injection molding with physical foaming. After the outsole 10 and the midsole 20 are manufactured through co-molding, a ratio of a volume of the midsole 20 to the volume of the foaming space S of the mold 300 is between 1 :0.98 and 1:1.02, i.e., close to 1:1. Therefore, the midsole 20 does not require excessive subsequent processing procedures nor attaching to a sole by using an adhesive. In this way, the method of manufacturing the co-molded shoe component 100 could avoid processing procedures on the outsole or the midsole, such as roughening surfaces, applying an adhesive, attaching a sole, etc., so that the production efficiency could be improved, and the production of waste could be reduced.

In step S1 and step S2, the mold is opened and the outsole 10 is taken out and then is placed in the mold 300 for subsequent co-molding and processing. It is worth mentioning that in practice, a structure of the mold could be slightly adjusted, i.e., after the top mold 203 of the mold 200 is opened, the outsole 10 remains located in the bottom mold 204, and the bottom mold 204 and the formed outsole 10 are simultaneously placed in the mold 300 for subsequent co-molding and processing.

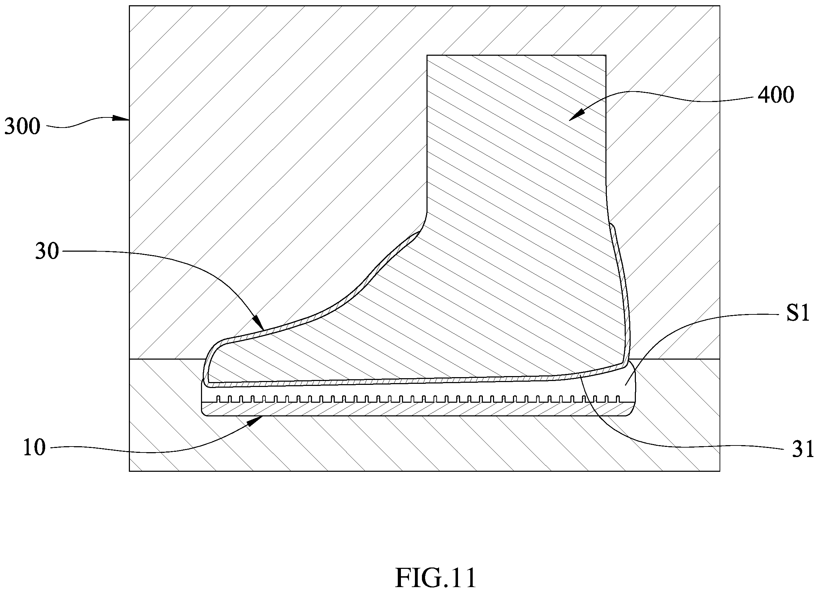

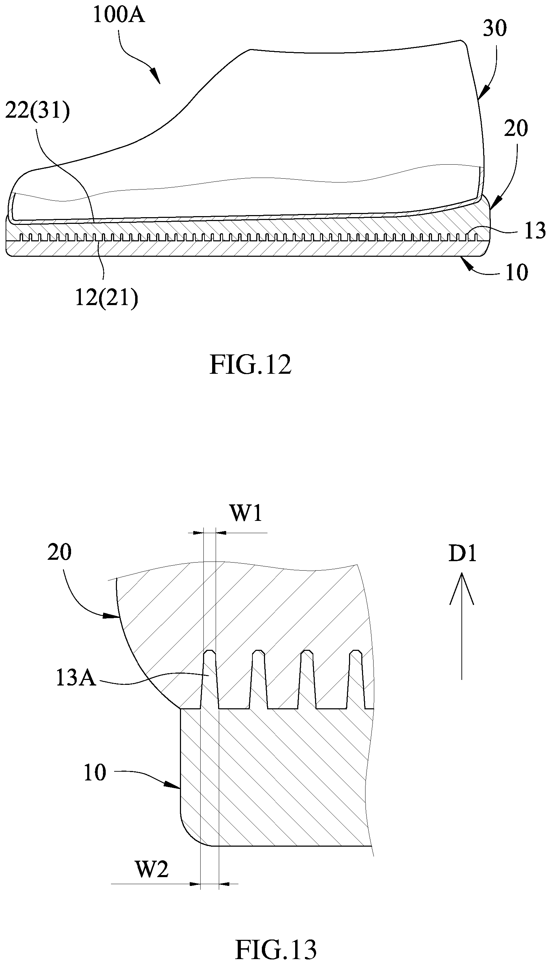

The co-molded shoe component 100 includes the outsole 10 and the midsole 20 as an example. It is worth mentioning that in other co-molding processes, an upper 30, which is formed through weaving, is lasted around a last 400 before the outsole 10 is placed in the mold cavity 301 of the mold 300. Referring to FIG. 11, the last 400 and the upper 30 are simultaneously placed in the mold 300, and a foaming space S1 is formed between a bottom of the upper 30 and the outsole 10. The foaming space S1 is configured to receive an injection of the thermoplastic foaming fluid and mold the midsole 20. Eventually, a co-molded shoe component 100A includes the outsole 10, the midsole 20, and the upper 30. Referring to FIG. 12, a bottom fabric surface 31 of the upper 30 and a top surface 22 of the midsole 20 are engaged through co-molding. The top surface 22 and the engaging surface 21 are opposite to each other. The upper 30 is a woven structure having a plurality of pores, so that an anchor effect could be generated at an engagement portion between the upper 30 and the midsole 20, thereby enhancing the stability between the upper 30 and the midsole 20. The engaging surface 21 of the midsole 20 remains engaging with the engaged surface 12 and the protrusions 13 of the outsole 10 to form a monolithic unit. In this way, the production efficiency could be improved.

In the aforementioned embodiment, the protrusions 13 have a constant diameter. However, the anchor structures are not limited to the protrusions 13 as shown in FIG. 7. All equivalent structures which satisfy the conditions that the A/B ratio is greater than 1, the number of the anchor structures per square centimeter C ranges between 40 and 180, and the interval G between two adjacent anchor structures of the anchor structures is greater than or equal to 0.3 mm and is less than or equal to 1.2 mm should fall within the scope of the present invention. In the below description, the anchor structures of the present invention having other equivalent configurations are illustrated as examples.

A configuration of the anchor structures shown in FIG. 13 is a plurality of protrusions 13A disposed along the first direction D1. The protrusions 13A are different from the protrusions 13 in the aforementioned embodiment in that a top portion width W1 of the top portion 13b of each of the protrusions 13A is less than or equal to a root portion width W2 of the root portion 13a of each of the protrusions 13A. The configuration of the anchor structures could enhance the engagement effect between the protrusions 13A and the engaged surface 12. Preferably, the top portion width W1 is less than the root portion width W2. The protrusions 13A could be formed through recessed holes of a mold or 3D printing.

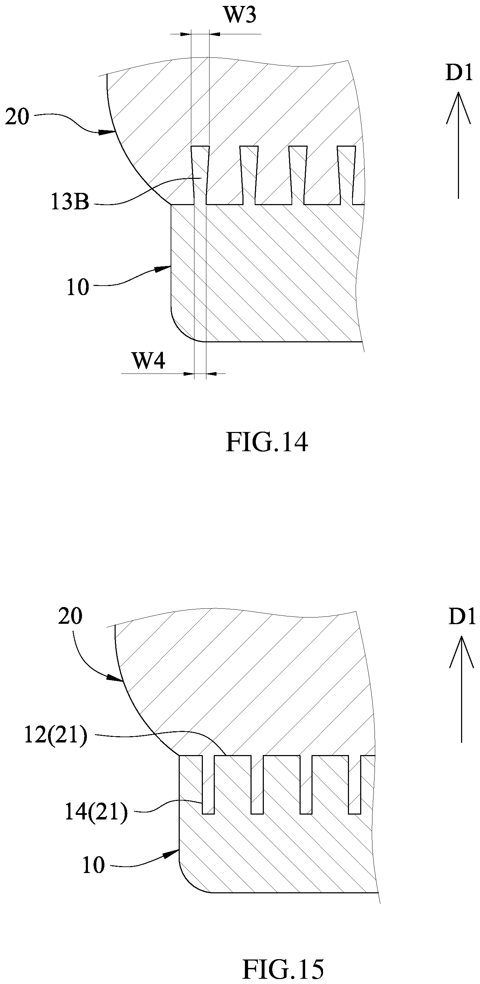

Another configuration of the anchor structures shown in FIG. 14 is a plurality of protrusions 13B along the first direction D1. The protrusions 13B are different from the protrusions 13 and the protrusions 13A in that a top portion width W3 of the top portion 13b of each of the protrusions 13B is greater than a root portion width W4 of the root portion 13a of each of the protrusions 13B. The another configuration of the anchor structures could enhance the adhesion strength between the midsole 20 and the outsole 10. The protrusions 13B could be formed through recessed holes of a mold or 3D printing. When the protrusions 13B are formed through the mold, the protrusions 13B with the wide top portion 13b and the narrow root portion 13a might cause difficulties in taking out the midsole 10 from the mold. However, since the outsole 10 is made of flexible materials, the outsole 10 could adaptively deform while being taken out from the mold. As long as the top portion width W3 is not significantly greater than the root portion width W4, the protrusions 13B could be formed through the mold.

It can be seen from the above that when the anchor structures of the outsole 10 of the present invention are the protrusions and the outsole 10 is co-molded with the midsole 20 through injection physical foaming, the contact surface area between the midsole 20 and the outsole 10 is increased, thereby ensuring and enhancing the adhesion strength between the midsole 20 and the outsole 10. Moreover, as taught by the configuration in FIG. 13 and the another configuration in FIG. 14, the protrusions could be also designed to have the top portion width equal to the root portion width while a middle portion of the protrusions has a width greater than the top portion width or less than the top portion width (not shown), which could also enhance the adhesion strength between the midsole 20 and the outsole 10.

The aforementioned configurations of the anchor structures are protrusions as examples. In practice, the anchor structures could have different equivalent configurations. Referring to FIG. 15, the anchor structures are recesses 14 formed by recessing into the engaged surface 12, wherein a depth of each of the recesses 14 is greater than or equal to 0.3 mm and is less than or equal to 1.2 mm; the recesses 14 could be formed through a plurality of protruding columns preset in a mold cavity of a mold (not shown) or 3D printing. During co-molding, when the thermoplastic foaming fluid is foamed in the mold, a part of the thermoplastic foaming fluid enters each of the recesses 14. Eventually, a part of the midsole 20 formed through co-molding fully fills each of the recesses 14, just like rivets inserting into holes, i.e., a part of the engaging surface 21 of the midsole 20 fully fills the recesses 14.

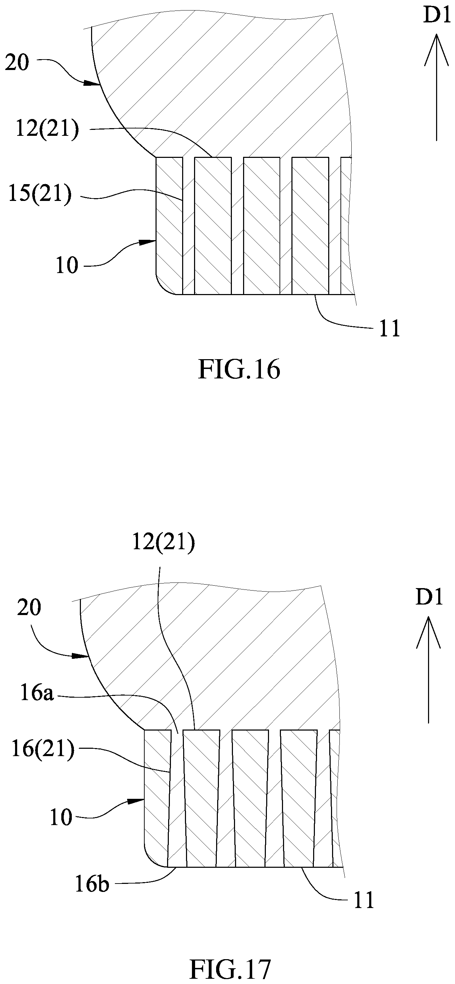

The anchor structures shown in FIG. 16 are a plurality of through holes 15. Each of the through holes 15 passes through the bottom surface 11 and the engaged surface 12 of the outsole 10. The through holes 15 could be formed through a plurality of protruding columns preset in a mold cavity of a mold (not shown) or 3D printing. During co-molding, a part of the thermoplastic foaming fluid enters each of the through holes 15, so that a part of the engaging surface 21 of the midsole 20 fully fills the through holes 15.

The anchor structures shown in FIG. 17 are a plurality of through holes 16. the through holes 16 are different from the through holes 15 in FIG. 16 in that each of the through holes 16 has a top opening 16a connected to the engaged surface 12 and a bottom opening 16b connected to the bottom surface 11, and a hole diameter of the top opening 16a is less than or equal to a hole diameter of the bottom opening 16b. In the current embodiment, each of the through holes 16 is a tapered hole with the hole diameter of the top opening 16a less than the hole diameter of the bottom opening 16b. Finally, a part of the midsole 20 formed through co-molding fully fills the through holes 16. As the through holes 16 have the narrow top opening 16a and the wide bottom opening 16b, the anchor effect between the midsole 20 and the outsole 10 is enhanced.

When the anchor structures of the present invention are the recesses 14, the through holes 15, and the through holes 16 as examples, the total surface area A of a sum of a surface area of an inner hole wall of the anchor structures and the surface area of the engaged surface 12 is still greater than the surface area B of the imaginary engaged surface. In this way, when the outsole 10 and the midsole 20 are integrally engaged to form a monolithic unit through co-molding, the adhesion strength between the outsole 10 and the midsole 20 could be greater than or equal to 3 kg/cm due to increasing the contact surface area.

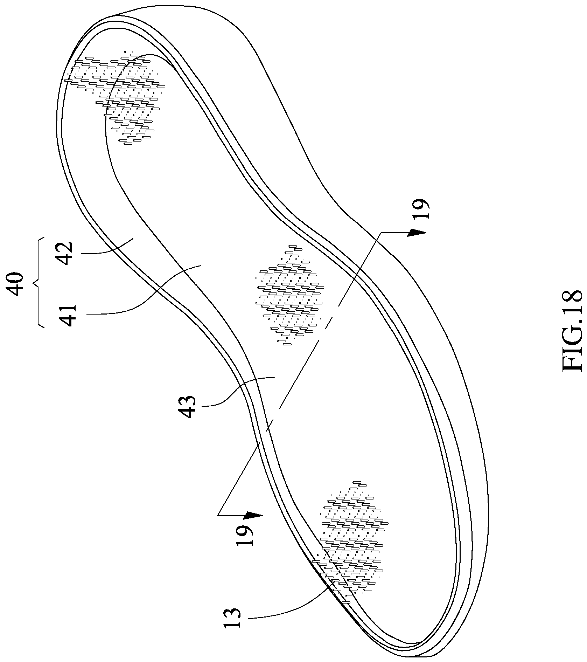

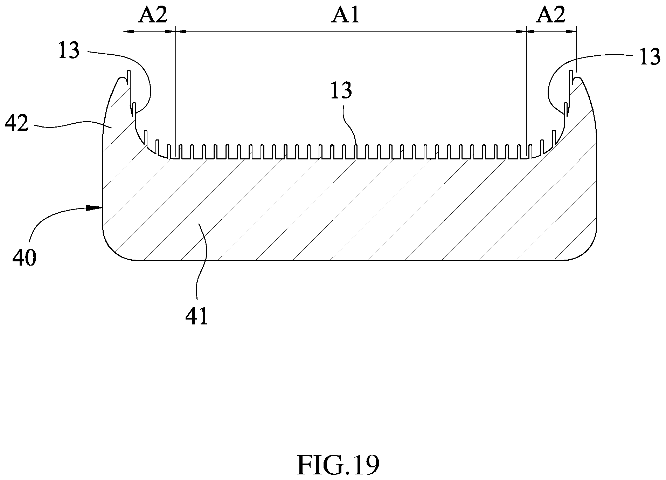

In the above description, the engaged surface 12 of the outsole 10 is a flat surface as an example. However, in practice, the outsole could have a side wall extending upwards along a peripheral edge of the outsole, wherein the side wall is configured to enhance a coverage when the outsole is engaged with the midsole. Referring to FIG. 18 and FIG. 19, in another embodiment, an outsole 40 includes a main body 41 and a side wall 42 extending upwards along a peripheral edge of the main body 41. A part of an engaged surface 43 of the outsole 40 corresponding to the main body 41 is defined as a first region A1. Another part of the engaged surface 43 corresponding to the side wall 42 is defined as a second region A2. In the current embodiment, the anchor structures are the protrusions 13 in FIG. 8 as an example. The protrusions 13 are distributed on the first region A1 and the second region A2, and the number of the protrusions 13 per square centimeter, the interval between two adjacent protrusions 13 of the protrusions 13, and the height of each of the protrusions 13 satisfy the requirements of the present invention. In this way, the contact surface area between the outsole 40 and the midsole 20 formed through co-molding could be further increased, and the midsole 20 is partially covered by the side wall 42, thereby improving the engagement stability after the midsole 20 is engaged with the outsole 40.

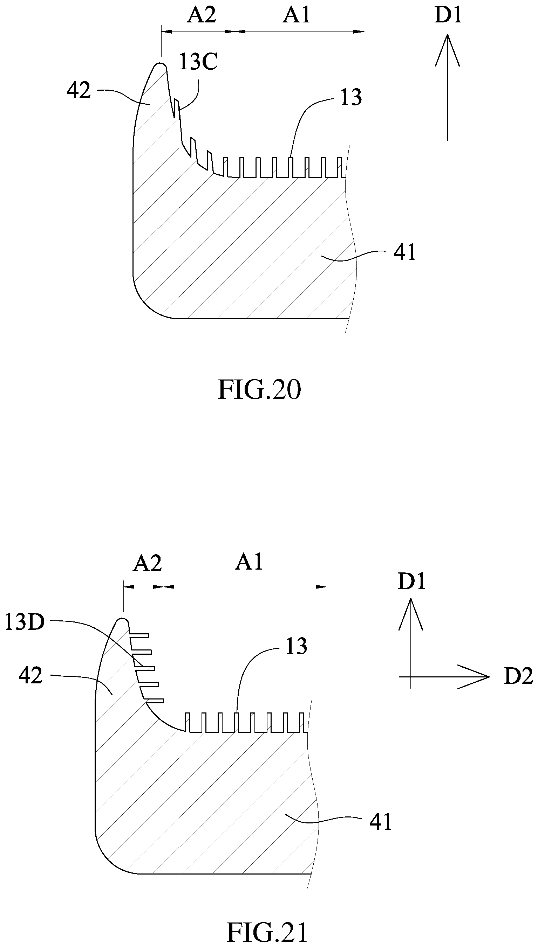

The anchor structures of the outsole 40 have a constant diameter and a constant height. However, under the basis that the outsole 40 includes the main body 41 and the side wall 42, the anchor structures could be modified. Referring to FIG. 20, for example, a root portion width of each of a plurality of protrusions 13 located in the first region A1 is less than a root portion width of each of a plurality of protrusions 13C located in the second region A2. Under the basis that the root portion width of each of the protrusions 13 located in the first region A1 is less than the root portion width of the protrusions 13C located in the second region A2, the top portion width of each of the protrusions 13 is greater than, equal to, or less than the root portion width of each of the protrusions 13. Preferably, a top portion width of each of the protrusions 13C is less than or equal to the root portion width of each of the protrusions 13C. In this way, a connection stability of the protrusions 13C in integrally connecting to a tilted surface of the side wall 42 could be further enhanced. Both the protrusions 13 and the protrusions 13C are disposed along the first direction D1, thereby facilitating the withdrawal of the outsole 40 from a mold.

When the outsole is formed through 3D printing, an extensions direction of the protrusions could be controlled. Referring to FIG. 21, the protrusions 13 located in the first region A1 are disposed along the first direction D1, and a plurality of protrusions 13D located in the second region A2 is disposed along a second direction D2, wherein the second direction D2 is not parallel to the first direction D1. Under the basis that the second direction D2 is not parallel to the first direction D1, the protrusions 13D could be disposed horizontally, obliquely upwards, or obliquely downwards. In this way, the midsole 20 formed through co-molding could be engaged with the outsole more firmly.

It is worth mentioning that the aforementioned configurations of the anchor structures, including the protrusions, the recesses, or the through holes, a surface of each of the anchor structures could be a rough surface, thereby enhancing the adhesion strength between the outsole and the midsole 20 formed through co-molding. Moreover, the anchor structures are disposed on the outsole as an example. However, in practice, the anchor structures could be disposed on a shoe component other than the outsole, such as a midsole overlay. All shoe components which are co-molded with the physically foamed midsole through the anchor structures should be considered equivalent to the present invention. Moreover, it is noted that the anchor structures in the drawings corresponding to the above embodiments are drawn for the purpose of easier understanding and explanation. The anchor structures in the drawings are not based on the actual size, proportion, or distribution of the actual product. Therefore, the sizes, proportions, or distributions of the anchor structures shown in the drawings should not construed as interpretative limitations.

## Claims

1. A co-molded shoe component (100, 100A), comprising:
an outsole (10, 40), comprising an engaged surface (12) and a plurality of anchor structures, wherein the plurality of anchor structures are located on the engaged surface (12); a total surface area A is a sum of a surface area of the plurality of anchor structures and a surface area of the engaged surface (12); a surface area B is a surface area of an imaginary engaged surface which does not have the plurality of anchor structures; an A/B ratio is greater than 1; and
a midsole (20), formed through physical foaming with a supercritical fluid, wherein the midsole (20) comprises an engaging surface (21); the engaging surface (21) of the midsole (20) is engaged with the engaged surface (12) and the plurality of anchor structures.

2. The co-molded shoe component (100, 100A) as claimed in claim 1, wherein the A/B ratio is greater than or equal to 1.2 and is less than or equal to 3.0.

3. The co-molded shoe component (100, 100A) as claimed in claim 1, wherein a number of the plurality of anchor structures per square centimeter (C) ranges between 40 and 180; an interval (G) between two adjacent anchor structures of the plurality of anchor structures is greater than or equal to 0.3 mm and is less than or equal to 1.2 mm.

4. The co-molded shoe component (100, 100A) as claimed in claim 3, wherein the plurality of anchor structures are a plurality of protrusions (13, 13A, 13B, 13C, 13D); each of the plurality of protrusions (13, 13A, 13B, 13C, 13D) has a root portion (13a) and a top portion (13b); the root portion (13a) is connected to the engaged surface (12); a height (H) of each of the plurality of protrusions (13, 13A, 13B, 13C, 13D) from the root portion (13a) to the top portion (13b) is greater than or equal to 0.3 mm and is less than or equal to 1.2 mm; the engaging surface (21) of the midsole (20) covers the engaged surface (12) and the plurality of anchor structures.

5. The co-molded shoe component (100, 100A) as claimed in claim 4, wherein the plurality of protrusions (13, 13A, 13B, 13C) are disposed along a first direction (D1); the first direction (D1) is perpendicular to the engaged surface (12) of the outsole (10, 40).

6. The co-molded shoe component (100, 100A) as claimed in claim 4, wherein the outsole (40) comprises a main body (41) and a side wall (42) extending upwards along a peripheral edge of the main body (41); a part of the engaged surface (43) corresponding to the main body (41) is defined as a first region (A1); another part of the engaged surface (43) corresponding to the side wall (42) is defined as a second region (A2); the root portion (13a) of each of the plurality of protrusions (13, 13A, 13B, 13C, 13D) has a root portion width (W2, W4); the root portion width (W2, W4) of each of the plurality of protrusions (13) located in the first region (A1) is less than is the root portion width (W2, W4) of each of the plurality of protrusions (13C, 13D) located in the second region (A2).

7. The co-molded shoe component (100, 100A) as claimed in claim 3, wherein the outsole (10, 40) has a bottom surface (11); the bottom surface (11) is opposite to the engaged surface (12); the plurality of anchor structures are a plurality of through holes (15, 16); each of the plurality of through holes (15, 16) passes through the engaged surface (12) of the outsole (10, 40) and the bottom surface (11); a part of the engaging surface (21) of the midsole (20) fully fills the plurality of through holes (15, 16).

8. The co-molded shoe component (100, 100A) as claimed in claim 7, wherein each of the plurality of through holes (16) has a top opening (16a) connected to the engaged surface (12); each of the plurality of through holes (16) has a bottom opening (16b) connected to the bottom surface (11); a hole diameter of the top opening (16a) is less than or equal to a hole diameter of the bottom opening (16b).

9. The co-molded shoe component (100, 100A) as claimed in claim 3, wherein the plurality of anchor structures are a plurality of recesses (14); each of the plurality of recesses (14) is formed by recessing into the engaged surface (12); a part of the engaging surface (21) of the midsole (20) fully fills the plurality of recesses (14).

10. The co-molded shoe component (100A) as claimed in claim 1, further comprising an upper (30), wherein the upper (30) is engaged with a top surface (22) of the midsole (20) through co-molding; the top surface (22) is opposite to the engaging surface (21).

11. A method of manufacturing a co-molded shoe component (100, 100A), comprising:
providing an outsole (10, 40), wherein the outsole (10, 40) has an engaged surface (12) and a plurality of anchor structures located on the engaged surface (12); a number of the plurality of anchor structures per square centimeter (C) ranges between 40 and 180;
placing the outsole (10, 40) in a mold (300) and reserving a foaming space (S, S1) in the mold (300);
controlling an air pressure in the mold (300) to be greater than or equal to 5 bar and be less than or equal to 50 bar;
injecting a thermoplastic foaming fluid into the foaming space (S, S1) of the mold (300), wherein the thermoplastic foaming fluid comprises a supercritical fluid;
releasing the air pressure in the mold (300) to foam the thermoplastic foaming fluid to form a midsole (20) which is physically foamed, wherein the midsole (20) has an engaging surface (21); the engaging surface (21) is engaged with the engaged surface (12) of the outsole (10, 40) and the plurality of anchor structures; and
opening the mold (300) and taking out a co-molded shoe component (100, 100A) comprising the outsole (10, 40) and the midsole (20).

12. The method as claimed in claim 11, wherein providing the outsole (10, 40) comprises:
providing another mold (200), wherein the another mold (200) is provided with a plurality of recessed holes (202) in a mold cavity (201) of the another mold (200); a number of the plurality of recessed holes (202) per square centimeter ranges between 40 and 180; and
injecting a thermoplastic material into the another mold (200), wherein the thermoplastic material fully fills the mold cavity (201) and the plurality of recessed holes (202); the thermoplastic material is cooled to form the outsole (10, 40).

13. The method as claimed in claim 12, wherein the another mold (200) is a metal 3D printed mold; the plurality of recessed holes (202) are structures that are formed during metal 3D printing.

14. The method as claimed in claim 12, wherein the plurality of recessed holes (202) of the another mold (200) are formed through electrical discharge machining or computer numerical control machining process.

15. The method as claimed in claim 11, further comprising simultaneously placing an upper (30) in the mold (300) while placing the outsole (10, 40) in the mold (300), wherein when the thermoplastic foaming fluid is foamed to form the midsole (20) which is physically foamed, a top surface (22) of the midsole (20) is engaged with the upper (30); the top surface (22) is opposite to the engaging surface (21).
